# FASCICULE DE BREVET EUROPEEN

(11) **EP 3 479 648 B1**
(45) Date de publication et mention de la délivrance du brevet: **29.09.2021**
(21) Numéro de dépôt: 17742816.6
(22) Date de dépôt: 29.06.2017
(51) Int. Cl.: H04W 88/06, H04B 1/00

(54) **CARTE ÉLECTRONIQUE**
ELEKTRONISCHE PLATINE
ELECTRONIC BOARD

(30) Priorité: 29.06.2016 FR 1656133
(43) Date de publication de la demande: 08.05.2019
(73) Titulaire: Hager Controls, 67700 Saverne (FR)
(72) Inventeur: COURREGES, Stanis, 67330 Kirrwiller (FR); KIEFFER, Daniel, 67580 Laubach (FR); WOHLFAHRT, Thomas, 67330 Dossenheim-sur-Zinsel (FR)
(74) Mandataire: Cabinet Nuss
(86) Numéro de dépôt international: PCT/FR2017/051738
(87) Numéro de publication internationale: WO 2018/002530

(56) Documents cités:
- EP-A1- 1 583 254
- US-A1- 2014 378 182
- US-A1- 2015 017 978
- US-A1- 2015 103 663
- US-A1- 2016 127 972

## Description

La présente invention concerne une carte électronique comprenant un circuit imprimé, un dispositif d'alimentation, un microcontrôleur alimenté en électricité par le dispositif d'alimentation et un premier moyen de communication par radiofréquence apte à communiquer dans une première bande de fréquences. Le dispositif d'alimentation, le microcontrôleur et le moyen de communication sont agencés sur le circuit imprimé.

Dans le domaine des applications industrielles, scientifiques, médicales, domestiques ou similaires, différentes bandes de fréquences peuvent être utilisées. Pour l'Union Européenne, les bandes de fréquences, et les éventuels niveaux limites sont définis dans la norme EN 55011.

Les cartes électroniques de ce type connues de l'art antérieur sont généralement prévues pour la communication radiofréquence dans une seule bande de fréquences selon cette norme. Ainsi, ce type de carte électronique peut être pourvu d'un premier moyen de communication apte à communiquer dans une première bande de fréquence.

Dans le contexte de différents objets communiquant et/ou échangeant des informations par radiofréquence, certains de ceux-ci peuvent être adaptés pour la communication dans une seule bande de fréquences et d'autres objets peuvent être conçus pour la communication dans une autre bande de fréquences. Par exemple dans le cadre des objets connectés ou de la domotique, différents protocoles peuvent être utilisés pour la communication dans ces différentes bandes de fréquences.

Actuellement, lorsqu'un dispositif électronique doit avoir la capacité de pouvoir communiquer avec différents objets, le cas échéant à travers divers protocoles de communication, ceux-ci sont actuellement pourvus de plusieurs cartes électroniques de ce type, c'est-à-dire une carte électronique par bande de fréquences utilisée. La nécessité de prévoir une carte électronique par bande de fréquences utilisée implique donc un encombrement qui augmente avec chaque bande de fréquences considérée.

Le document US 2015/017978 A1 divulgue des systèmes et des procédés pour un module de commutateur d'antenne pour un dispositif électronique. Le module de commutateur d'antenne comprend une pluralité de commutateurs d'antenne positionnés en série et configurés pour faire passer des signaux entre l'antenne et la circuiterie de communication sans fil et pour fonctionner sélectivement dans l'une des bandes.

Le document US 2015/103663 A1 divulgue des systèmes et des procédés permettant à un client WLAN de communiquer simultanément sur plusieurs bandes à la fois, chaque client disposant d'au moins une radio opérationnelle dans chaque bande prise en charge. L'équilibrage de charge basé sur les exigences de trafic optimise l'utilisation des bandes multiples.

Le document US 2014/378182 A1 divulgue une technologie par laquelle des caractéristiques d'isolation parmi une pluralité de trajets de signaux à travers lesquels passent les signaux RF peuvent être améliorées sans utiliser d'électrodes de mise à la terre ou analogue.

Le document EP 1 583 254 A1 divulgue un dispositive de separation de signaux comprenant une première et deuxième branche de circuit reliées à un port d'antenne, la première branche de circuit comprenant un filtre pour laisser passer des signaux dans une première bande de fréquence et la deuxième branche de circuit comprenant un filtre pour laisser passer des signaux dans une deuxième bande de fréquence.

Le document US 2016/127972 A1 divulgue un dispositif d'utilisateur qui sélectionne un module de communication parmi une pluralité de modules de communication du dispositif d'utilisateur pour communiquer des premières données à un premier dispositif dans une première configuration, qui sélectionne une première antenne parmi une pluralité d'antennes du dispositif d'utilisateur pour communiquer les premières données dans la première configuration, et qui couple le module de communication à la première antenne dans la première configuration.

La présente invention a pour objet de proposer une carte électronique regroupant les fonctions de deux cartes électroniques distinctes afin de réduire l'encombrement total.

A cet effet, l'invention a pour objet une carte électronique comprenant un circuit imprimé, un dispositif d'alimentation, un microcontrôleur alimenté en électricité par le dispositif d'alimentation et un premier moyen de communication apte à communiquer par radiofréquence dans une première bande de fréquences, le dispositif d'alimentation, le microcontrôleur et le premier moyen de communication étant agencés sur le circuit imprimé, la carte électronique comprenant un deuxième moyen de communication apte à communiquer par radiofréquence dans une deuxième bande de fréquences distincte et/ou disjointe de la première bande de fréquences.

Ainsi, en regroupant deux moyens de communication distincts, c'est-à-dire un pour chaque bande de fréquences utilisée, l'encombrement total peut être réduit.

Selon une possibilité, le microcontrôleur, le premier moyen de communication et le deuxième moyen de communication peuvent être regroupés dans un même boîtier.

Selon une possibilité, la première bande de fréquences comprend des fréquences supérieures à 1 GHz et la deuxième bande de fréquences comprend des fréquences inférieures à 1 GHz, le deuxième moyen de communication étant de préférence apte à communiquer dans une troisième bande de fréquences comprenant des fréquences inférieures à 500 MHz.

Selon une possibilité, la première bande de fréquences comprend les fréquences entre 2400 et 2483 MHz et la deuxième bande de fréquences comprend les fréquences entre 868 et 950 MHz, la troisième bande de fréquences comprenant de préférence les fréquences entre 169 et 435 MHz.

Selon une caractéristique additionnelle possible, le premier moyen de communication est(sont) apte(s) à communiquer à l'aide d'au moins un des protocoles de communication Bluetooth, Bluetooth Low Energy, ZigBee, Thread, ou d'autres protocoles dans la première bande de fréquences et le deuxième moyen de communication est(sont) en outre apte(s) à communiquer à l'aide d'au moins un des protocoles de communication KNX RF, ZigBee, SigFox, LoRa, EnOcean, Z-wave, W-MBUS, ou d'autres protocoles dans la deuxième bande de fréquences.

Conformément à l'invention, le circuit imprimé comprend une première couche conductrice extérieure, une deuxième couche conductrice extérieure et au moins une couche conductrice intérieure, de préférence au moins deux couches conductrices intérieures, agencée(s) entre la première couche conductrice extérieure et la deuxième couche conductrice extérieure, le circuit imprimé comprenant en outre une première couche diélectrique extérieure disposée entre la première couche conductrice extérieure et la couche conductrice intérieure ou la couche conductrice intérieure adjacente à la première couche conductrice extérieure, une deuxième couche diélectrique extérieure disposée entre la deuxième couche conductrice extérieure et la couche conductrice intérieure ou la couche conductrice intérieure adjacente à la deuxième couche conductrice extérieure, et au moins une couche diélectrique intérieure disposée entre deux couches conductrices intérieures adjacentes, le dispositif d'alimentation, le microcontrôleur et le dispositif de communication étant agencés sur la première couche conductrice extérieure et/ou sur la deuxième couche conductrice extérieure.

Ces caractéristiques permettent de réduire l'encombrement de la carte électronique, et de réduire en particulier sa hauteur et sa largeur.

Toujours conformément à l'invention, la première couche conductrice extérieure, la deuxième couche conductrice extérieure et la ou les couche(s) conductrice(s) présentent une première épaisseur, la première couche diélectrique extérieure et la deuxième couche diélectrique extérieure présentant une deuxième épaisseur, la ou les couche(s) diélectrique(s) intérieure(s) présentant une troisième épaisseur, la première épaisseur étant inférieure à la deuxième épaisseur et la troisième épaisseur étant supérieure à la deuxième épaisseur.

Ces caractéristiques permettent davantage de réduire l'encombrement de la carte électronique tout en assurant que, lors du procédé de fabrication du circuit imprimé, celui-ci ne soit pas déformé.

Toujours conformément à l'invention, la première épaisseur correspond à une épaisseur entre 25 µm et 35 µm, de préférence d'environ 30 µm, la deuxième épaisseur correspond à une épaisseur entre 60 µm et 70 µm, de préférence d'environ 62 µm et la troisième épaisseur correspondant à une épaisseur entre 250 µm et 800 µm, de préférence d'environ 500 µm.

Ces caractéristiques permettent davantage de réduire l'encombrement de la carte électronique tout en assurant que, lors du procédé de fabrication du circuit imprimé, celui-ci ne soit pas déformé.

Selon une caractéristique additionnelle possible, la première couche conductrice extérieure et/ou la deuxième couche conductrice extérieure et/ou la ou les couche(s) conductrice(s) intérieure(s) comprennent respectivement au moins une piste conductrice.

Ces caractéristiques permettent de réduire les perturbations apparaissant dans le moyen de communication concerné provoquées par les signaux parcourant les pistes conductrices.

Selon une caractéristique additionnelle possible, la ou au moins l'une des piste(s) conductrice(s) de la première couche conductrice extérieure et/ou la ou au moins l'une des piste(s) conductrice(s) de la deuxième couche conductrice extérieure est(sont) reliée(s) à la ou au moins l'une des piste(s) conductrice(s) de la ou d'au moins une des couche(s) conductrice(s) extérieure(s) est(sont) reliée(s) électriquement par le biais d'au moins une voie conductrice.

Selon une possibilité, la ou les voie(s) conductrice(s) présente(nt) une section essentiellement circulaire, présentant de préférence un diamètre inférieur à environ 150 µm.

Ces caractéristiques permettent de réduire l'encombrement de la carte électronique, en particulier sa hauteur et sa largeur.

Selon une possibilité, le circuit imprimé est doté d'une hauteur inférieure ou égale à environ 70 mm, de préférence inférieure ou égale à environ 40 mm, de préférence inférieure ou égale à 31,75 mm.

Selon une possibilité, la carte électronique et/ou le circuit imprimé est doté d'une largeur inférieure ou égale à environ 50 mm, de préférence inférieure ou égale à environ 40 mm, de préférence inférieure ou égale à 31,75 mm.

Selon une possibilité, la carte électronique comprend en outre une première sortie d'antenne, un système de circuit passif et un combineur, le système de circuit passif étant relié d'un part à la première sortie d'antenne et d'autre part au combineur, le combineur étant en outre relié au premier moyen de communication et au deuxième moyen de communication, la carte électronique comprenant de préférence en outre une antenne combinée reliée électriquement à la première sortie d'antenne et adaptée pour la communication dans la deuxième bande de fréquences, le système de circuit passif permettant le décalage d'un premier harmonique d'une résonnance de l'antenne combinée vers la première bande de fréquences.

Selon cette possibilité, il peut être renoncé à une deuxième antenne pour la deuxième bande de fréquences et ainsi l'encombrement de la carte électronique et/ou du circuit imprimé est davantage réduit.

Selon une caractéristique additionnelle possible, la carte électronique comprend en outre une première sortie d'antenne reliée électriquement au premier moyen de communication et une deuxième sortie d'antenne reliée électriquement au deuxième moyen de communication, la carte électronique comprenant de préférence en outre une première antenne adaptée pour la communication dans la première bande et reliée électriquement à la première sortie d'antenne et/ou une deuxième antenne adaptée pour la communication dans la deuxième bande de fréquences et de préférence la troisième bande de fréquences et reliée électriquement à la deuxième sortie d'antenne.

Ces caractéristiques permettent d'obtenir des performances améliorées de communication dans les deux bandes de fréquences, voire les trois bandes de fréquences.

Selon une possibilité, le microcontrôleur et le dispositif d'alimentation sont agencés sur la première couche conductrice extérieure et le premier moyen de communication, le deuxième moyen de communication, la première sortie d'antenne et la deuxième sortie d'antenne et, le cas échéant, la première antenne et la deuxième antenne sont agencés sur la deuxième couche conductrice extérieure.

Ces caractéristiques permettent de davantage réduire l'encombrement de la carte électronique et/ou du circuit imprimé, en particulier de réduire la hauteur et/ou la largeur de la carte électronique.

Selon une possibilité, la carte électronique comprend en outre un commutateur apte à être actionné par le microcontrôleur, une première sortie d'antenne reliée électriquement au premier moyen de communication, une deuxième sortie d'antenne reliée électriquement à une première sortie du commutateur et une troisième sortie d'antenne reliée électriquement à une deuxième sortie du commutateur, une entrée du commutateur étant reliée au deuxième moyen de communication, le commutateur étant adapté pour, en fonction d'une commande du microcontrôleur, soit relier le deuxième moyen de communication et la deuxième sortie d'antenne, soit relier le deuxième moyen de communication et la troisième sortie d'antenne, la carte électronique comprenant de préférence en outre une première antenne adaptée pour la communication dans la première bande de fréquences et reliée électriquement à la première sortie d'antenne et/ou une deuxième antenne adaptée pour la communication dans la deuxième bande de fréquences et reliée électriquement à la deuxième sortie d'antenne et/ou une troisième antenne adaptée pour la communication dans la troisième bande de fréquences et reliée électriquement à la troisième sortie d'antenne.

Selon ces caractéristiques, il peut être renoncé à une carte électronique additionnelle pour communiquer dans la troisième bande de fréquences.

Selon une possibilité, l'antenne combinée et/ou la première antenne et/ou la deuxième antenne et/ou la troisième antenne comprend au moins une couche diélectrique, de préférence en un matériau céramique, et une couche conductrice recouvrant au moins en partie la couche diélectrique.

Ces caractéristiques permettent d'augmenter les performances de la carte électronique, c'est-à-dire la performance de communication.

Selon une caractéristique additionnelle possible, le circuit imprimé est essentiellement de forme rectangulaire ou carrée et la première sortie d'antenne et/ou la deuxième sortie d'antenne et/ou la troisième sortie d'antenne est(sont) agencée(s) à proximité d'un bord du circuit imprimé.

Ces caractéristiques permettent de faciliter le branchement de la première antenne et/ou de la deuxième antenne et/ou de la troisième antenne et/ou de l'antenne combinée.

Selon une possibilité, la carte électronique comprend en outre au moins un contact électrique/électronique agencé sur un bord du circuit imprimé, de préférence sur un bord de la deuxième couche conductrice extérieure du circuit imprimé.

Ces caractéristiques permettent de faciliter l'intégration de la carte électronique dans un dispositif électronique.

Selon une caractéristique additionnelle possible, une zone avoisinant chacun des quatre coins du circuit imprimé est exempte de contact électrique/électronique.

Ces caractéristiques permettent d'éviter une distorsion du circuit imprimé lors du soudage des contacts électriques.

Selon une possibilité, la première bande de fréquences, la deuxième bande fréquences et la troisième bande de fréquences ne présente aucune fréquence commune.

Selon une possibilité, la couche conductrice intérieure et/ou la couche conductrice intérieure parmi les couches conductrices intérieures la plus proche de la première couche conductrice extérieure est, dans une zone entre le premier moyen de communication et la première sortie d'antenne et/ou la première antenne et/ou dans une zone entre le deuxième moyen de communication et la deuxième sortie d'antenne et/ou la deuxième antenne et/ou la troisième sortie d'antenne, essentiellement exempt de piste conductrice.

L'invention sera mieux comprise, grâce à la description ci-après, qui se rapporte à cinq modes de réalisation préférés, donnés à titre d'exemples non limitatifs, et expliqués avec référence aux dessins schématiques annexés, dans lesquels :

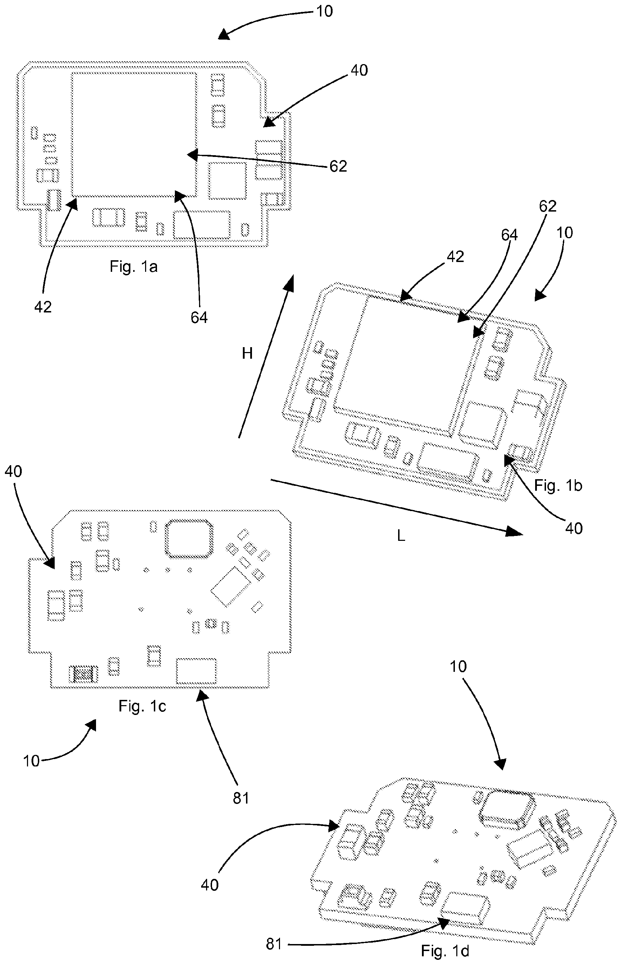

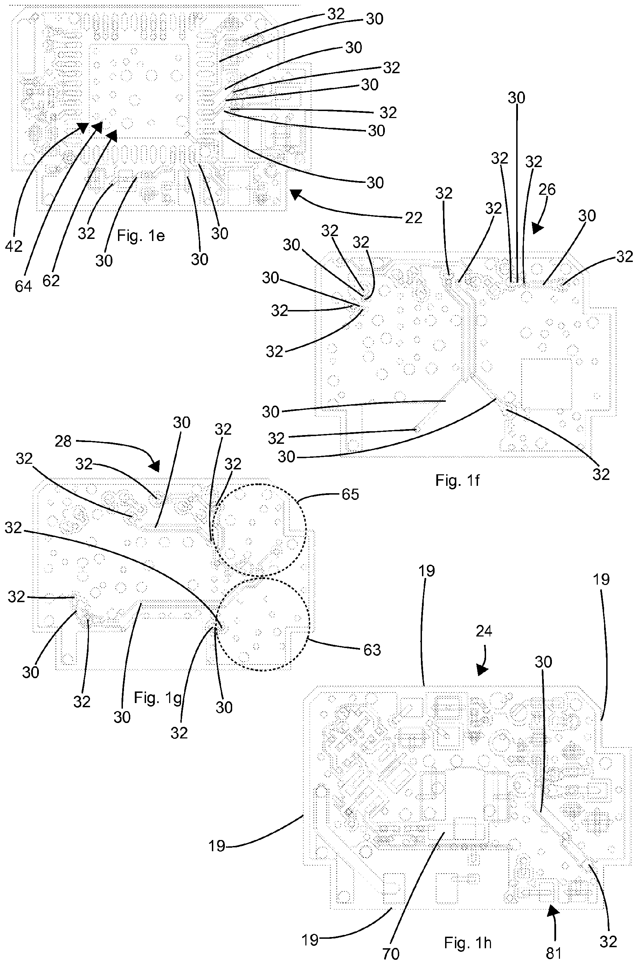

les figures 1a à 1d sont des représentations schématiques de la carte électronique selon un premier mode de réalisation ;
la figure le est une représentation d'un plan d'une première couche conductrice extérieure selon un premier mode de réalisation ;
la figure 1f est une représentation d'un plan d'une première couche conductrice intérieure selon un premier mode de réalisation ;
la figure 1g est une représentation d'un plan d'une deuxième couche conductrice intérieure selon un premier mode de réalisation ;
la figure 1h est une représentation d'un plan d'une deuxième couche conductrice extérieure selon un premier mode de réalisation ;
les figures 2a et 2b montrent des vues schématiques de la carte électronique selon un deuxième mode de réalisation ;
la figure 2c est une représentation d'un plan d'une première couche conductrice extérieure selon un deuxième mode de réalisation ;
la figure 2d est une représentation d'un plan d'une première couche conductrice intérieure selon un deuxième mode de réalisation ;
la figure 2e est une représentation d'un plan d'une deuxième couche conductrice intérieure selon un deuxième mode de réalisation ;
la figure 2f est une représentation d'un plan d'une deuxième couche conductrice extérieure selon un deuxième mode de réalisation ;
les figures 3a et 3b montrent des vues schématiques de la carte électronique selon un troisième mode de réalisation ;
la figure 3c est une représentation d'un plan d'une première couche conductrice extérieure selon un troisième mode de réalisation ;
la figure 3d est une représentation d'un plan d'une première couche conductrice intérieure selon un troisième mode de réalisation ;
la figure 3e est une représentation d'un plan d'une deuxième couche conductrice intérieure selon un troisième mode de réalisation ;
la figure 3f est une représentation d'un plan d'une deuxième couche conductrice extérieure selon un troisième mode de réalisation ;
la figure 3g est un schéma électrique d'un circuit passif de la carte électronique selon le troisième mode de réalisation ;
la figure 3h est un graphique d'affaiblissement d'adaptation ;

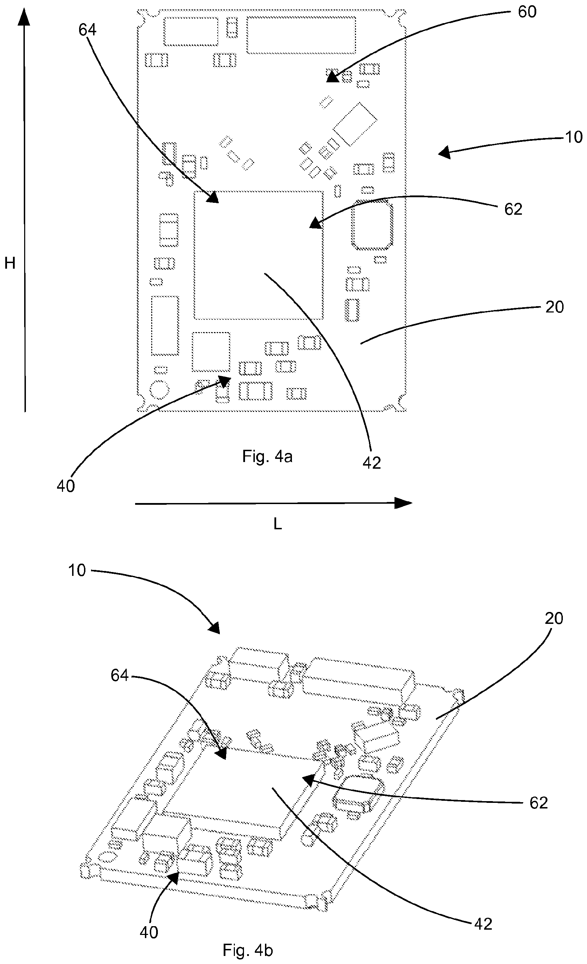

les figures 4a et 4b montrent des vues schématiques de la carte électronique selon un quatrième mode de réalisation ;

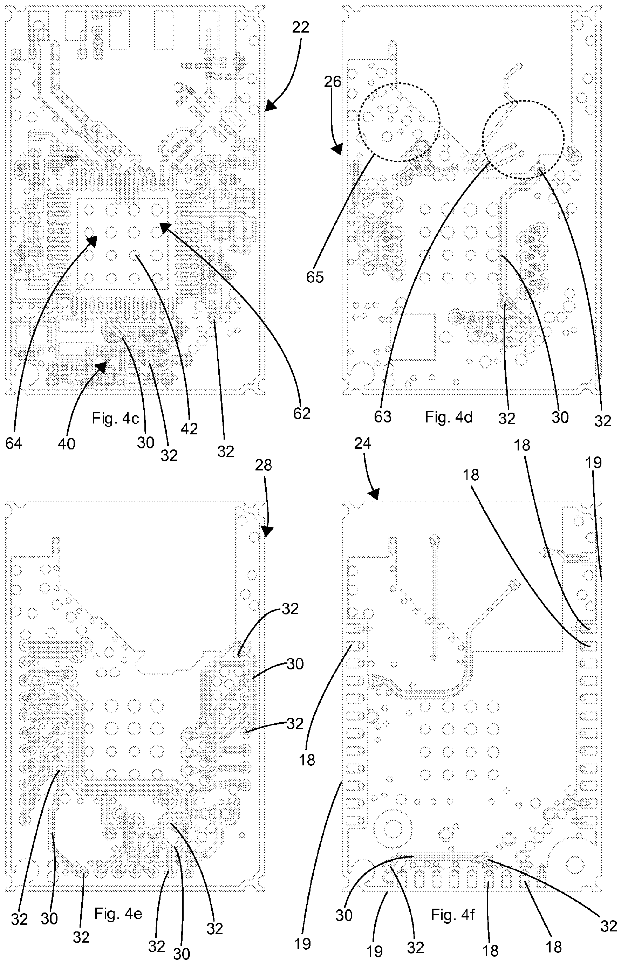

la figure 4c est une représentation d'un plan d'une première couche conductrice extérieure selon un quatrième mode de réalisation ;
la figure 4d est une représentation d'un plan d'une première couche conductrice intérieure selon un quatrième mode de réalisation ;
la figure 4e est une représentation d'un plan d'une deuxième couche conductrice intérieure selon un quatrième mode de réalisation ;
la figure 4f est une représentation d'un plan d'une deuxième couche conductrice extérieure selon un quatrième mode de réalisation ;
les figures 5a et 5b montrent des vues schématiques de la carte électronique selon un cinquième mode de réalisation ;
la figure 5c est une représentation d'un plan d'une première couche conductrice extérieure selon un cinquième mode de réalisation ;
la figure 5d est une représentation d'un plan d'une première couche conductrice intérieure selon un cinquième mode de réalisation ;
la figure 5e est une représentation d'un plan d'une deuxième couche conductrice intérieure selon un cinquième mode de réalisation ;
la figure 5f est une représentation d'un plan d'une deuxième couche conductrice extérieure selon un cinquième mode de réalisation ;
la figure 6 est une représentation schématique d'une section d'un circuit imprimé de la carte électronique selon tous les modes de réalisation ;
les figures 7a et 7b montrent des vues schématiques de la carte électronique selon un sixième mode de réalisation ;
la figure 7c est une représentation d'un plan d'une première couche conductrice extérieure selon un sixième mode de réalisation ;
la figure 7d est une représentation d'un plan d'une première couche conductrice intérieure selon un sixième mode de réalisation ;
la figure 7e est une représentation d'un plan d'une deuxième couche conductrice intérieure selon un sixième mode de réalisation ;
la figure 7f est une représentation d'un plan d'une deuxième couche conductrice extérieure selon un sixième mode de réalisation.

L'invention concerne une carte électronique 10. La carte électronique 10 selon les cinq modes de réalisation de l'invention comprend un circuit imprimé 20, un dispositif d'alimentation 40, un microcontrôleur 42 alimenté en électricité par le dispositif d'alimentation 40 et un dispositif de communication 60 par radiofréquence. Le dispositif d'alimentation 40, le microcontrôleur 42 et le dispositif de communication 60 sont agencés sur le circuit imprimé 20. Le dispositif de communication 60 comprend un premier moyen de communication 62 apte à communiquer dans une première bande de fréquences. Le dispositif de communication 60 comprend un deuxième moyen de communication 64 apte à communiquer dans une deuxième bande de fréquences. La première bande de fréquences est distincte et/ou disjointe de la première bande de fréquences.

La première bande de fréquences peut comprendre des fréquences supérieures à 1 GHz et la deuxième bande de fréquences peut comprendre des fréquences inférieures à 1 GHz. Le deuxième moyen de communication 64 peut en outre être apte à communiquer dans une troisième bande de fréquences comprenant des fréquences inférieures à 500 MHz.

La première bande de fréquences peut comprendre des fréquences entre 2 400 et 2 483 MHz et la deuxième bande de fréquences peut comprendre des fréquences entre 868 et 950 MHz. La troisième bande de fréquences peut comprendre des fréquences entre 169 et 435 MHz.

Le premier moyen de communication 62 peut être apte à communiquer à l'aide d'au moins un des protocoles de communication : Bluetooth, Bluetooth Low Energy, ZigBee, Thread, ou d'autres protocoles dans la première bande de fréquences. Le deuxième moyen de communication 64 peut être apte à communiquer à l'aide d'au moins un des protocoles de communication : KNX RF, ZigBee, SigFox, LoRa, EnOcean, Z-wave, W-MBUS, ou d'autres protocoles dans la deuxième bande de fréquences.

Le circuit imprimé 20 de la carte électronique 10 selon les cinq modes de réalisation peut comprendre quatre couches conductrices 22, 24, 26, 28, c'est-à-dire une première couche conductrice extérieure 22, une deuxième couche conductrice extérieure 24, une première couche conductrice intérieure 26 et une deuxième couche conductrice intérieure 28.

Le circuit imprimé 20 de la carte électronique 10 selon les cinq modes de réalisation peut en outre comprendre trois couches diélectriques 21, 23, 25, c'est-à-dire une première couche diélectrique extérieure 21, une deuxième couche diélectrique extérieure 23 et une couche diélectrique intérieure 25. La première couche diélectrique extérieure 21 peut être agencée entre la première couche conductrice extérieure 22 et la première couche conductrice intérieure 26. La deuxième couche diélectrique extérieure 23 peut être agencée entre la deuxième couche conductrice extérieure 24 et la deuxième couche conductrice intérieure 28. Ainsi, le circuit imprimé 20 peut être composé d'un total de sept couches et les couches conductrices extérieures 22, 24 peuvent ainsi former les faces externes du circuit imprimé 20.

Chaque couche conductrice 22, 24, 26, 28 peut être dotée d'au moins une piste conductrice 30. La ou les piste(s) conductrice(s) 30 d'une parmi les couches conductrices 22, 24, 26, 28 peut être reliée à une autre piste conductrice 30 d'une autre parmi les couches conductrices 22, 24, 26, 28 à l'aide d'une voie 32. La voie 32 peut également être nommée via.

Dans un plan s'étendant en parallèle aux différentes couches conductrices 22, 24, 26, 28 et/ou couches diélectriques 21, 23, 25, la voie 32 peut présenter une section essentiellement circulaire présentant de préférence un diamètre inférieur à 150 µm. Une voie 32 dimensionnée de cette manière peut également être nommée microvia.

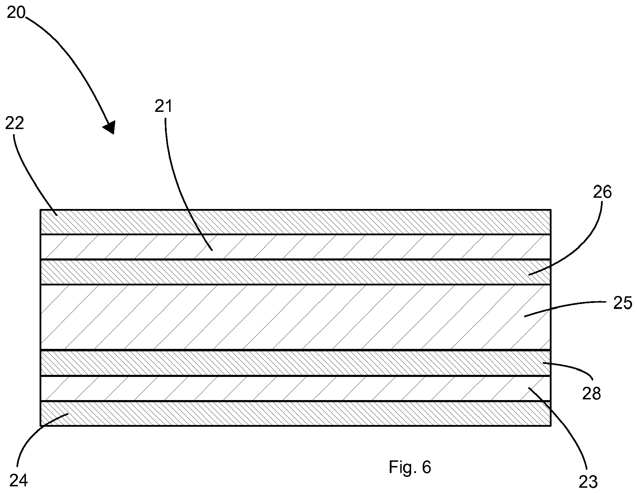

La première couche conductrice extérieure 22, la deuxième couche conductrice extérieure 24, la première couche conductrice intérieure 26 et la deuxième couche conductrice intérieure 28 peuvent être dotées essentiellement de la même première épaisseur. De préférence, la première épaisseur est comprise entre 25 µm et 35 µm et peut en outre préférentiellement valoir environ 30 µm. La première couche diélectrique extérieure 21 et la deuxième couche diélectrique extérieure 23 peuvent être dotées de sensiblement la même deuxième épaisseur. De préférence, la deuxième épaisseur est comprise entre 60 et 70 µm et correspondent outrement préférentiellement à environ 62 µm. La couche diélectrique intérieure 25 peut être dotée d'une troisième épaisseur. La troisième épaisseur est nettement supérieure à la deuxième épaisseur. La troisième épaisseur peut être comprise entre 250 µm et 800 µm et outrement préférentiellement valoir environ 500 µm. Une vue schématique d'une section du circuit imprimé 20 est représenté dans la figure 6.

Ces dimensions des différentes couches conductrices 22, 24, 26, 28 des circuits imprimés 20 permettent d'éviter des distorsions apparaissant lors du procédé de fabrication. Les différentes dimensions précitées que peuvent prendre la première couche diélectrique extérieure 21 et la deuxième couche diélectrique extérieure 22 permettent de réduire en dimension la section des voies 32 et ainsi réduire les dimensions absolues du circuit imprimé 20, et en conséquence de la carte électronique 10.

Dans les différentes vues des couches conductrices 22, 24, 26, 28 selon les cinq modes de réalisation de la carte électronique 10 uniquement une partie des pistes conductrices 30 et des voies 32 ont été dotés de références numériques pour des raisons de lisibilité.

Le premier moyen de communication 62 et/ou le deuxième moyen de communication 64 peut(peuvent) être agencé(s) soit sur la première couche conductrice extérieure 22, soit sur la deuxième couche conductrice extérieure 24. Lorsque le premier moyen de communication 62 et/ou le deuxième moyen de communication 64 est(sont) agencé(s) sur la première couche conductrice extérieure, la première couche conductrice intérieure 26, c'est-à-dire la couche conductrice intérieure 26, 28 la plus proche de la première couche conductrice extérieure 22 est, dans une première zone 63 entre le premier moyen de communication 62 et la première sortie d'antenne 66 et/ou la première antenne 81 et/ou dans une deuxième zone 65 entre le deuxième moyen de communication 64 et la deuxième sortie d'antenne 70 et/ou la deuxième antenne et/ou la troisième sortie d'antenne 72, essentiellement exempt de piste conductrice 30. Dans le cas où le premier moyen de communication 62 et/ou le deuxième moyen de communication 64 sont agencés du côté de la deuxième couche conductrice extérieure 24, la deuxième couche conductrice intérieure 28, c'est-à-dire la couche conductrice intérieure 28 parmi les couches conductrices intérieures 26, 28 la plus proche de la deuxième couche conductrice extérieure 24 est, dans une première zone 63 entre le premier moyen de communication 62 et la première sortie d'antenne 66 et/ou la première antenne 81 et/ou dans une deuxième zone 65 entre le deuxième moyen de communication 64 et la deuxième sortie d'antenne 70 et/ou la deuxième antenne et/ou la troisième sortie d'antenne 72, essentiellement exempt de piste conductrice 30.

Ainsi, les perturbations électromagnétiques pouvant réduire les performances du premier moyen de communication 62 et/ou du deuxième moyen de communication 64 sont réduites.

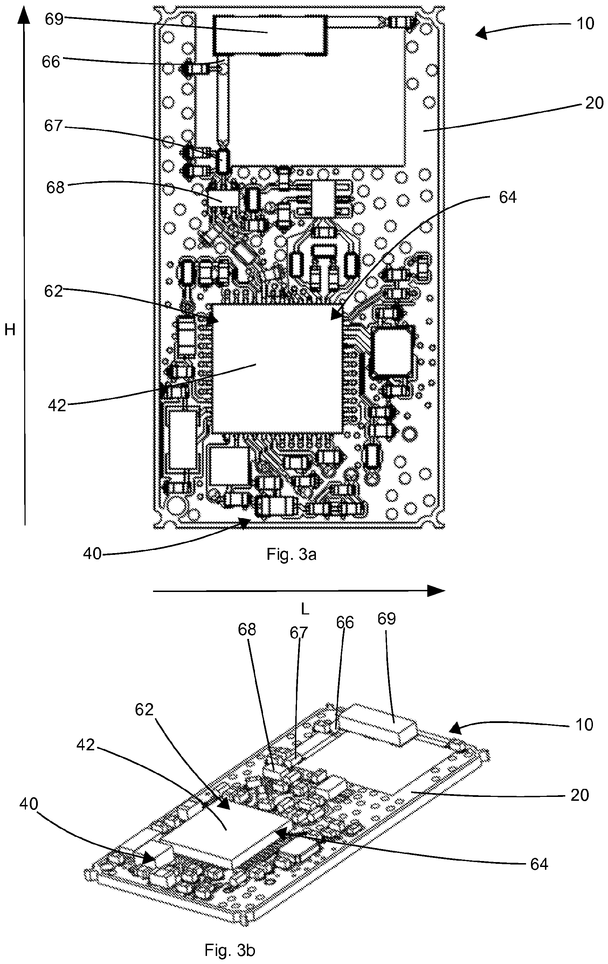

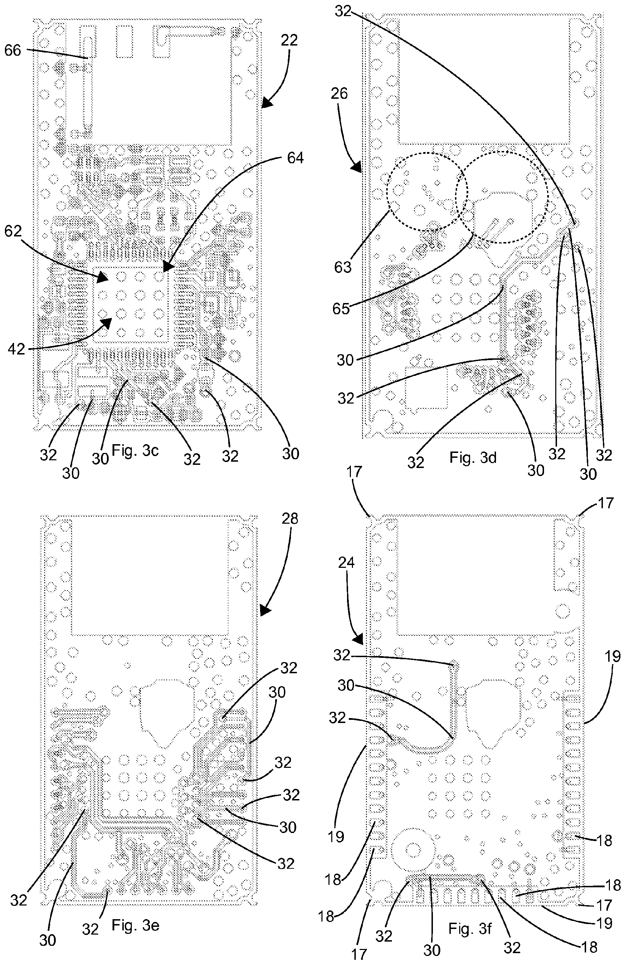

Dans le mode de réalisation divulgué dans les figures 3a à 3h, la carte électronique 10 peut en outre comprendre une première sortie d'antenne 66, un système de circuit passif 67 et un combineur 68. Le système de circuit passif 67 peut être relié d'une part à la première sortie d'antenne 66 et d'autre part au combineur 68. Le combineur 68 peut en outre être relié au premier moyen de communication 62 et au deuxième moyen de communication 64. La carte électronique 10 peut comprendre de préférence en outre une antenne combinée 69 reliée électriquement à la première sortie d'antenne 66 et peut être adaptée pour la communication dans la deuxième bande de fréquences. Le système de circuit passif 67 permettant le décalage d'un premier harmonique d'une résonnance de l'antenne combinée 69 vers la première bande de fréquences

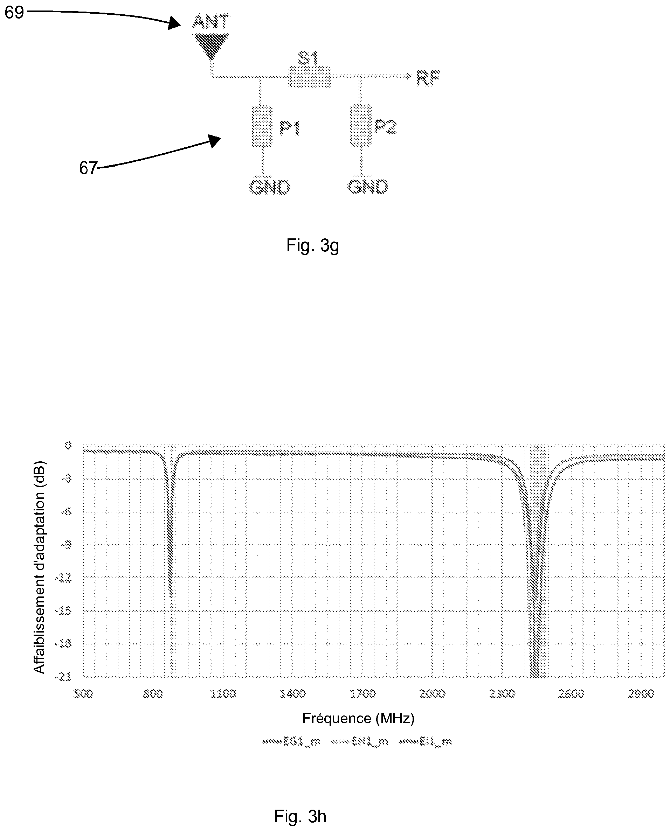

Ainsi, la carte électronique 10 est dans la mesure de communiquer dans la première bande de fréquences et la deuxième bande de fréquences à l'aide d'une seule même antenne combinée 69. Un schéma électrique du circuit passif 67 est divulgué dans la figure 3g. La figure 3h divulgue un graphique indiquant l'affaiblissement d'adaptation en fonction de la fréquence.

Dans ce même mode de réalisation, l'antenne combinée 69, le système de circuit passif 67, la première sortie d'antenne 66, le combineur 68, le premier moyen de communication 62, le deuxième moyen de communication 64, le microcontrôleur 42 et le dispositif d'alimentation 40 sont agencés sur la première couche conductrice extérieure.

Dans les modes de réalisation divulgués dans les figures la à 1h, 2a à 2f, ainsi que 4a à 4f, la carte électronique 10 peut en outre comprendre une première sortie d'antenne 66 reliée électriquement au premier moyen de communication 62 et une deuxième sortie d'antenne 70 reliée électriquement au deuxième moyen de communication 64. La carte électronique 10 peut de préférence comprendre en outre une première antenne 81 adaptée pour la communication dans la première bande et reliée électriquement à la première sortie d'antenne 66. La carte électronique 10 peut de préférence comprendre une deuxième antenne adaptée pour la communication dans la deuxième bande de fréquences. De préférence, la deuxième antenne peut également être adaptée pour la communication dans la troisième bande de fréquences, et être reliée électriquement à la deuxième sortie d'antenne 70.

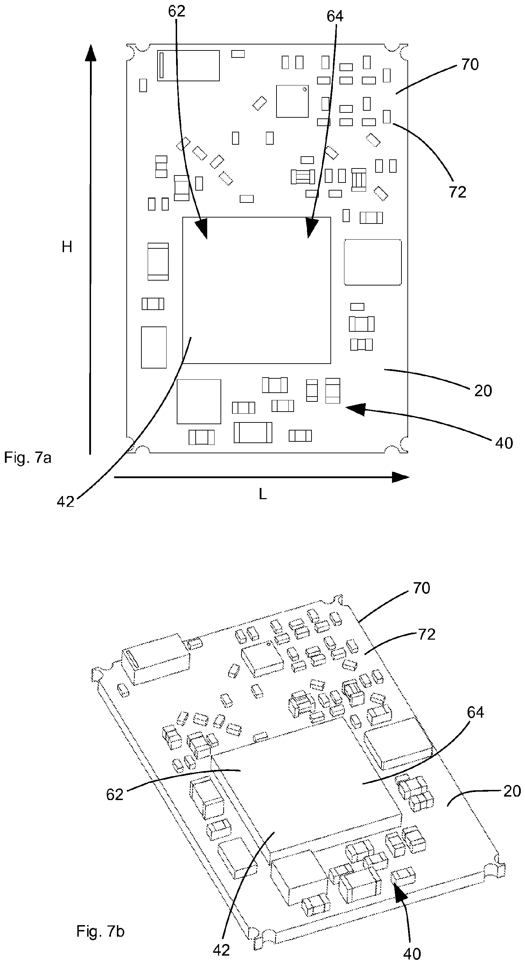

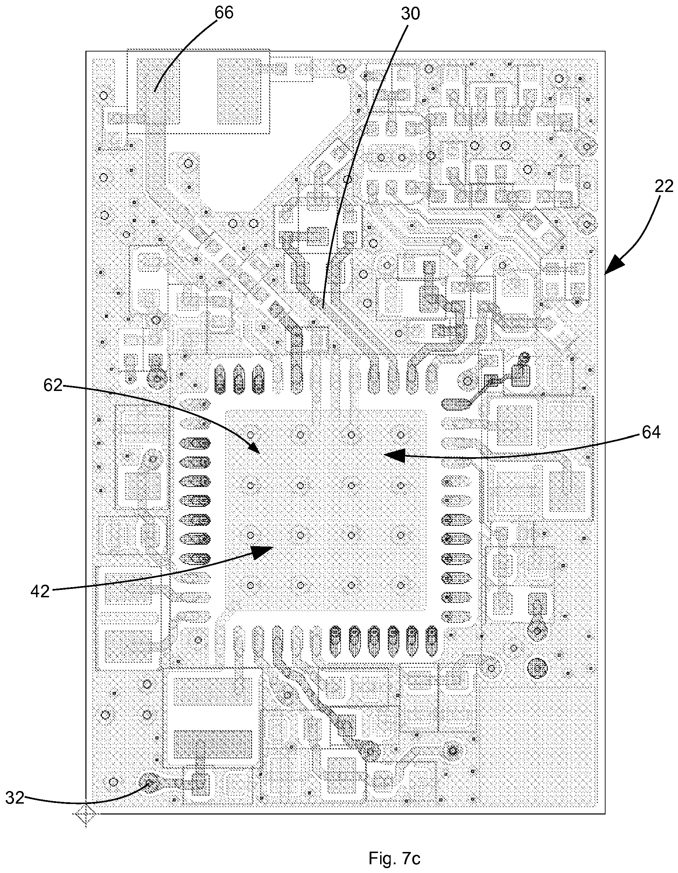

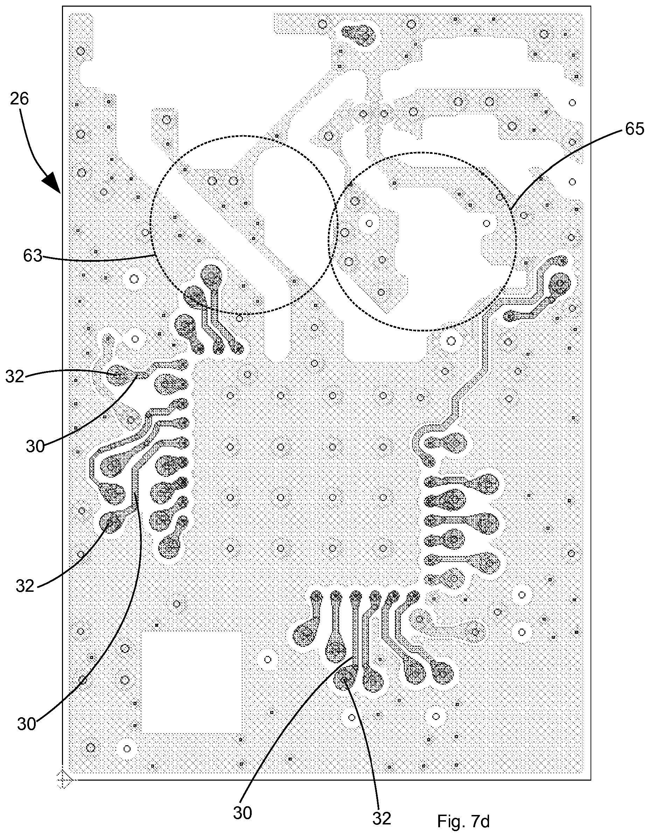

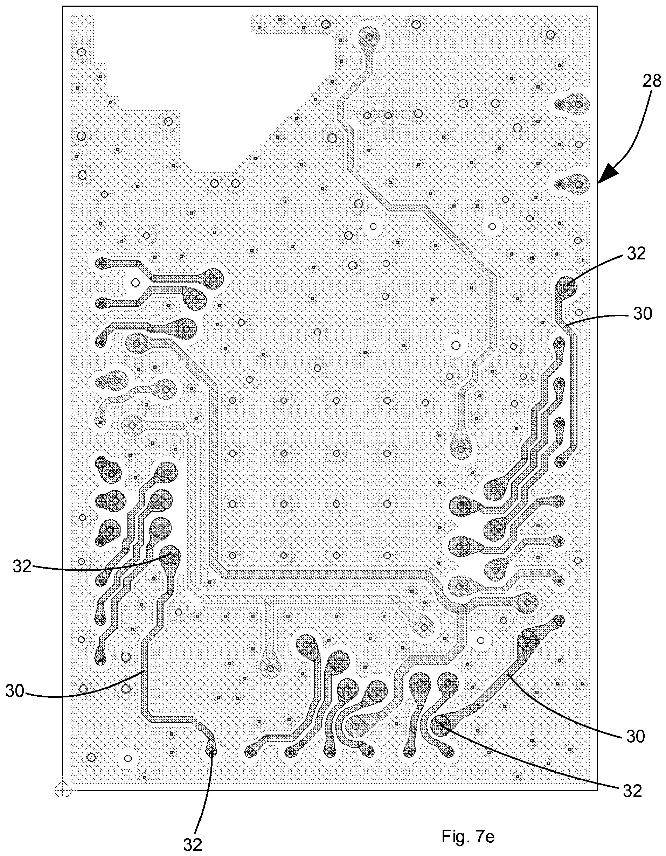

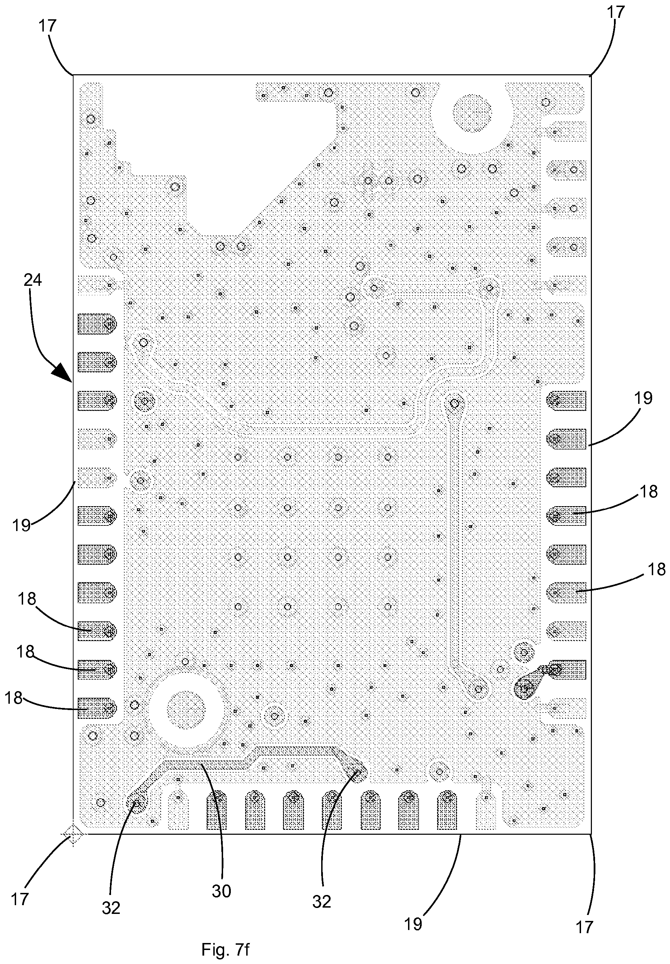

Dans le mode de réalisation divulgué dans les figures 7a à 7f, la carte électronique 10 peut être dépourvue de deuxième antenne. Ainsi, les dimensions et le volume de la carte électronique 10 peuvent être réduits. Dans ce même mode de réalisation la première antenne 81 peut également être adaptée pour la communication dans la deuxième bande de fréquence.

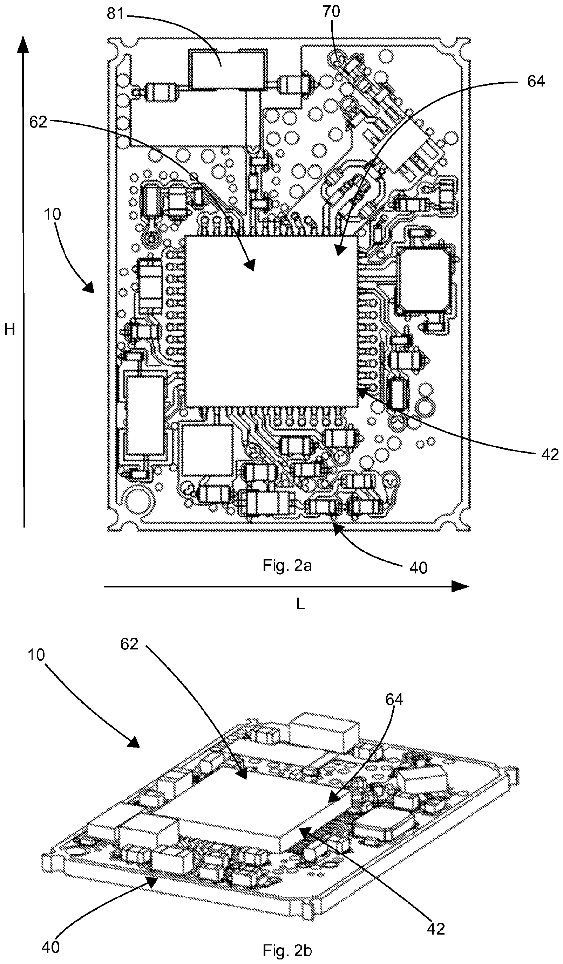

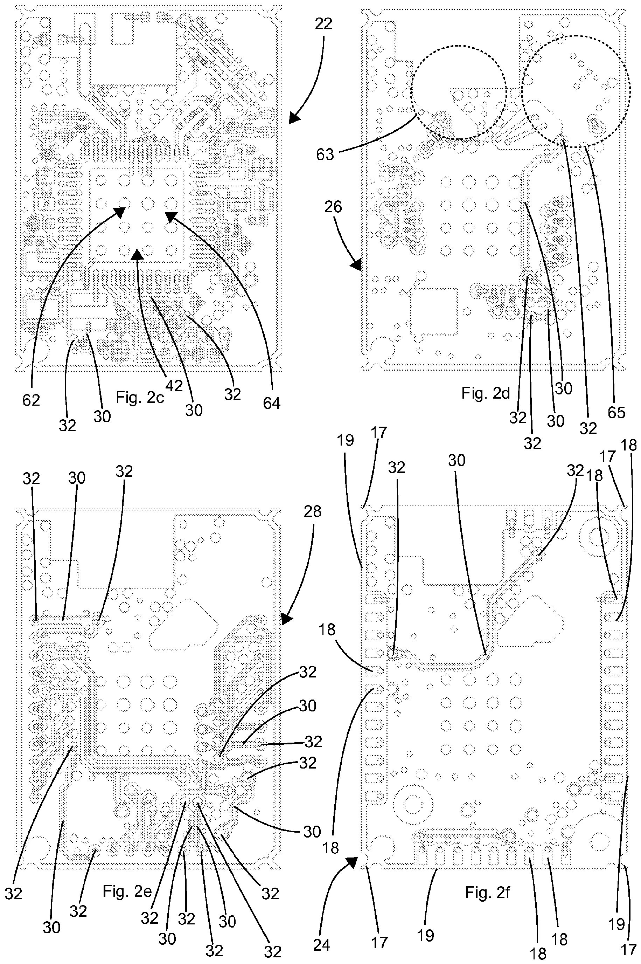

Dans les modes de réalisation divulgués dans les figures 2a à 2f, ainsi que 4a à 4f, la première antenne 81, la deuxième antenne, la première sortie d'antenne 66, la deuxième sortie d'antenne 70, le premier moyen de communication 62, le deuxième moyen de communication 64, le microcontrôleur 42 et le dispositif d'alimentation 40 peuvent être agencés sur la première couche conductrice extérieure 22.

Dans le mode de réalisation divulgué dans les figures la à 1h, le microcontrôleur 42, le premier moyen de communication 62, le deuxième moyen de communication 64 et le dispositif d'alimentation 40 peuvent être agencés sur la première couche conductrice extérieure 22.

Dans ce même mode de réalisation, la première sortie d'antenne 66, la deuxième sortie d'antenne 70, le cas échéant, la première antenne 81 et la deuxième antenne, peuvent être agencés sur la deuxième couche conductrice extérieure 24. Selon une possibilité, dans ce mode de réalisation, les bords du circuit imprimé 20 et/ou les bords 19 de la deuxième couche conductrice extérieure 24 peuvent être exempt de contacts électriques/électroniques.

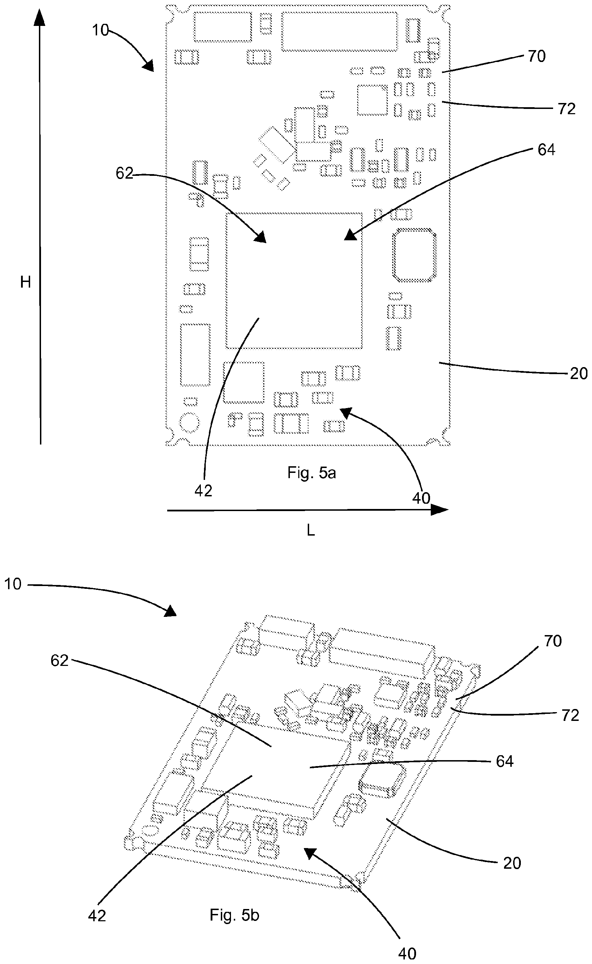

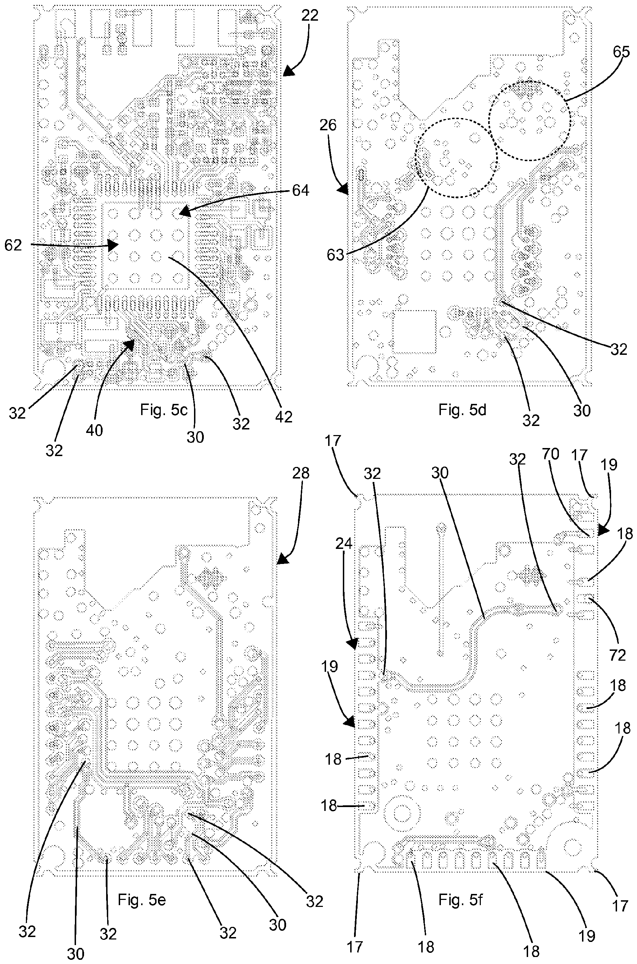

Dans le mode de réalisation divulgué dans les figures 5a à 5f, la carte électronique 10 peut en outre comprendre un commutateur apte à être actionné par le microcontrôleur 42, une première sortie d'antenne 66 reliée électriquement au premier moyen de communication 62, une deuxième sortie d'antenne 70 reliée électriquement à une première sortie du commutateur et une troisième sortie d'antenne 72 reliée électriquement à une deuxième sortie 36 du commutateur. Une entrée du commutateur peut être reliée au deuxième moyen de communication 64. Le commutateur peut être adapté pour, en fonction d'une commande du microcontrôleur 42, soit relier le deuxième moyen de communication 64 et la deuxième sortie d'antenne 70, soit relier le deuxième moyen de communication 64 et la troisième sortie d'antenne 72. La carte électronique 10 peut de préférence comprendre en outre une première antenne 81 adaptée pour la communication dans la première bande de fréquences et reliée électriquement à la première sortie d'antenne 66. La carte électronique 10 peut en outre comprendre une deuxième antenne adaptée pour la communication dans la deuxième bande de fréquences et reliée électriquement à la deuxième sortie d'antenne 70 et/ou une troisième antenne adaptée pour la communication dans la troisième bande de fréquences et reliée électriquement à la troisième sortie d'antenne 72.

Selon une possibilité, dans tous les modes de réalisation, l'antenne combinée 69 et/ou la première antenne 81 et/ou la deuxième antenne et/ou la troisième antenne peut(peuvent) comprendre au moins une couche diélectrique, de préférence en un matériau céramique, et une couche conductrice recouvrant au moins en partie la couche diélectrique.

La carte électronique 10 peut être de forme essentiellement rectangulaire ou carrée et présenter une hauteur H et une largeur L. Selon une possibilité, la hauteur peut être d'environ 70 mm et la largeur peut être d'environ 50 mm. Selon une autre possibilité, la hauteur peut être d'environ 40 mm et la largeur peut être d'environ 40 mm. Selon une autre possibilité, la hauteur peut être d'environ 31,75 mm et la largeur peut être d'environ 31,75 mm.

Dans les modes de réalisation divulgués dans les figures 2a à 2f, ainsi que 3a à 3h, 4a à 4f et 5a à 5f, la carte électronique 10 peut en outre comprendre au moins un contact électrique/électronique 18 agencé sur un bord 19 du circuit imprimé 20, de préférence sur un bord 19 de la deuxième couche conductrice extérieure 24 du circuit imprimé 20.

Ces caractéristiques permettent de faciliter l'intégration de la carte électronique dans un dispositif électronique.

Dans tous les modes de réalisation, une zone avoisinant chacun des quatre coins 17 du circuit imprimé 20 peut être exempte de contact électrique/électronique 18.

Ces caractéristiques permettent d'éviter une distorsion du circuit imprimé lors du soudage des contacts électriques.

Selon une possibilité, les contacts électriques/électroniques 18 sont espacés l'un de l'autre de façon sensiblement équidistante.

Selon une possibilité, les contacts électriques/électroniques 18 sont sensiblement de même dimensions.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention qui est défini par les revendications.

## Revendications

1. Carte électronique comprenant un circuit imprimé (20), un dispositif d'alimentation (40), un microcontrôleur (42) alimenté en électricité par le dispositif d'alimentation (40) et un premier moyen de communication (62) apte à communiquer par radiofréquence dans une première bande de fréquences, le dispositif d'alimentation (40), le microcontrôleur (42) et le premier moyen de communication (62) étant agencés sur le circuit imprimé (20), la carte électronique (10) comprenant un deuxième moyen de communication (64) apte à communiquer par radiofréquence dans une deuxième bande de fréquences distincte et/ou disjointe de la première bande de fréquences, **caractérisée en ce que** le circuit imprimé (20) comprend une première couche conductrice extérieure (22), une deuxième couche conductrice extérieure (24) et au moins une couche conductrice intérieure (26, 28), de préférence au moins deux couches conductrices intérieures (26, 28), agencée(s) entre la première couche conductrice extérieure (22) et la deuxième couche conductrice extérieure (24), le circuit imprimé (20) comprenant en outre une première couche diélectrique extérieure (21) disposée entre la première couche conductrice extérieure (22) et la couche conductrice intérieure (26, 28) ou la couche conductrice intérieure (26) adjacente à la première couche conductrice extérieure (22), une deuxième couche diélectrique extérieure (23) disposée entre la deuxième couche conductrice extérieure (24) et la couche conductrice intérieure (26, 28) ou la couche conductrice intérieure (28) adjacente à la deuxième couche conductrice extérieure (24), et au moins une couche diélectrique intérieure (25) disposée entre deux couches conductrices intérieures adjacentes (26, 28), le dispositif d'alimentation (40), le microcontrôleur (42) et le dispositif de communication (60) étant agencés sur la première couche conductrice extérieure (22) et/ou sur la deuxième couche conductrice extérieure (24), **en ce que** la première couche conductrice extérieure (22), la deuxième couche conductrice extérieure (24) et la ou les couche(s) conductrice(s) intérieure(s) (26, 28) présentent une première épaisseur, la première couche diélectrique extérieure (21) et la deuxième couche diélectrique extérieure (23) présentant une deuxième épaisseur, la ou les couche(s) diélectrique(s) intérieure(s) (25) présentant une troisième épaisseur, la première épaisseur étant inférieure à la deuxième épaisseur et la troisième épaisseur étant supérieure à la deuxième épaisseur, et **en ce que** la première épaisseur correspond à une épaisseur entre 25 µm et 35 µm, de préférence d'environ 30 µm, la deuxième épaisseur correspond à une épaisseur entre 60 µm et 70 µm, de préférence d'environ 62 µm et la troisième épaisseur correspond à une épaisseur entre 250 µm et 800 µm, de préférence d'environ 500 µm.

2. Carte électronique selon la revendication 1, **caractérisée en ce que** la première couche conductrice extérieure (22) et/ou la deuxième couche conductrice extérieure (24) et/ou la ou les couche(s) conductrice(s) intérieure(s) (26, 28) comprennent respectivement au moins une piste conductrice (30).

3. Carte électronique selon la revendication 2, **caractérisée en ce que** la ou au moins l'une des piste(s) conductrice(s) (30) de la première couche conductrice extérieure (22) et/ou la ou au moins l'une des piste(s) conductrice(s) (30) de la deuxième couche conductrice extérieure (24) est(sont) reliée(s) à la ou au moins l'une des piste(s) conductrice(s) (30) de la ou d'au moins une des couche(s) conductrice(s) extérieure(s) est(sont) reliée(s) électriquement par le biais d'au moins une voie conductrice (32).

4. Carte électronique selon la revendication 3, **caractérisée en ce que** la ou les voie(s) conductrice(s) (32) présente(nt) une section essentiellement circulaire, présentant de préférence un diamètre inférieur à environ 150 µm.

5. Carte électronique selon l'une quelconque des revendications 1 à 4, **caractérisée en ce qu'**elle comprend en outre une première sortie d'antenne (66), un système de circuit passif (67) et un combineur (68), le système de circuit passif (67) étant relié d'une part à la première sortie d'antenne (66) et d'autre part au combineur (68), le combineur (68) étant en outre relié au premier moyen de communication (62) et au deuxième moyen de communication (64), la carte électronique (10) comprenant de préférence en outre une antenne combinée (69) reliée électriquement à la première sortie d'antenne (66) et adaptée pour la communication dans la deuxième bande de fréquences, le système de circuit passif (67) permettant le décalage d'un premier harmonique d'une résonnance de l'antenne combinée (69) vers la première bande de fréquences.

6. Carte électronique selon l'une quelconque des revendications 1 à 4, **caractérisée en ce qu'**elle comprend en outre une première sortie d'antenne (66) reliée électriquement au premier moyen de communication (62) et une deuxième sortie d'antenne (70) reliée électriquement au deuxième moyen de communication (64), la carte électronique (10) comprenant de préférence en outre une première antenne (81) adaptée pour la communication dans la première bande et reliée électriquement à la première sortie d'antenne (66) et/ou une deuxième antenne adaptée pour la communication dans la deuxième bande de fréquences, et de préférence la troisième bande de fréquences, et reliée électriquement à la deuxième sortie d'antenne (70).

7. Carte électronique selon la revendication 6, **caractérisée en ce que** le microcontrôleur (42) et le dispositif d'alimentation (40) sont agencés sur la première couche conductrice extérieure (22) et **en ce que** le premier moyen de communication (62), le deuxième moyen de communication (64), la première sortie d'antenne (66) et la deuxième sortie d'antenne (70) et, le cas échéant, la première antenne (81) et la deuxième antenne sont agencés sur la deuxième couche conductrice extérieure (24).

8. Carte électronique selon l'une quelconque des revendications 1 à 4, **caractérisée en ce qu'**elle comprend en outre un commutateur apte à être actionné par le microcontrôleur (42), une première sortie d'antenne (66) reliée électriquement au premier moyen de communication (62), une deuxième sortie d'antenne (70) reliée électriquement à une première sortie du commutateur et une troisième sortie d'antenne (72) reliée électriquement à une deuxième sortie (36) du commutateur, une entrée du commutateur étant reliée au deuxième moyen de communication (64), le commutateur étant adapté pour, en fonction d'une commande du microcontrôleur (42), soit relier le deuxième moyen de communication (64) et la deuxième sortie d'antenne (70), soit relier le deuxième moyen de communication (64) et la troisième sortie d'antenne (72), la carte électronique (10) comprenant de préférence en outre une première antenne (81) adaptée pour la communication dans la première bande de fréquences et reliée électriquement à la première sortie d'antenne (66) et/ou une deuxième antenne adaptée pour la communication dans la deuxième bande de fréquences et reliée électriquement à la deuxième sortie d'antenne (70) et/ou une troisième antenne adaptée pour la communication dans la troisième bande de fréquences et reliée électriquement à la troisième sortie d'antenne (72).

9. Carte électronique selon l'une quelconque des revendications 5 à 8, **caractérisée en ce que** l'antenne combinée (69) et/ou la première antenne (81) et/ou la deuxième antenne et/ou la troisième antenne comprend au moins une couche diélectrique, de préférence en un matériau céramique, et une couche conductrice recouvrant au moins en partie la couche diélectrique.

10. Carte électronique selon l'une quelconque des revendications 5 à 9, **caractérisée en ce que** le circuit imprimé (20) est essentiellement de forme rectangulaire ou carrée et **en ce que** la première sortie d'antenne (66) et/ou la deuxième sortie d'antenne (70) et/ou la troisième sortie d'antenne (72) est(sont) agencée(s) à proximité d'un bord (19) du circuit imprimé (20).

11. Carte électronique selon l'une quelconque des revendications 1 à 6, 8 ou 9, **caractérisée en ce qu'**elle comprend en outre au moins un contact électrique/électronique (18) agencé sur un bord (19) du circuit imprimé (20), de préférence sur un bord (19) de la deuxième couche conductrice extérieure (24) du circuit imprimé (20).

12. Carte électronique selon la revendication 10 prise en combinaison avec la revendication 11, **caractérisée en ce que** une zone avoisinant chacun des quatre coins (17) du circuit imprimé (20) est exempte de contact électrique/électronique (18).

13. Carte électronique selon l'une quelconque des revendications revendication 2 à 12, **caractérisée en ce que** la couche conductrice intérieure (26, 28) et/ou la couche conductrice intérieure parmi les couches conductrices intérieures (26) la plus proche de la première couche conductrice extérieure (22) est, dans une zone (63) entre le premier moyen de communication (62) et la première sortie d'antenne (66) et/ou la première antenne (81) et/ou dans une zone (65) entre le deuxième moyen de communication (64) et la deuxième sortie d'antenne (70) et/ou la deuxième antenne et/ou la troisième sortie d'antenne (72), essentiellement exempt de piste conductrice (30).

14. Carte électronique selon l'une quelconque des revendications 1 à 13, **caractérisée en ce que** la première bande de fréquences comprend des fréquences supérieures à 1 GHz et la deuxième bande de fréquences comprend des fréquences inférieures à 1 GHz, le deuxième moyen de communication (64) étant de préférence apte à communiquer dans une troisième bande de fréquences comprenant des fréquences inférieures à 500 MHz.

15. Carte électronique selon la revendication 14, **caractérisée en ce que** la première bande de fréquences comprend les fréquences entre 2400 et 2483 MHz et **en ce que** la deuxième bande de fréquences comprend les fréquences entre 868 et 950 MHz, la troisième bande de fréquences comprenant de préférence les fréquences entre 169 et 435 MHz.

16. Carte électronique selon l'une quelconque des revendications 14 à 15, **caractérisée en ce que** le premier moyen de communication est apte à communiquer à l'aide d'au moins un des protocoles de communication Bluetooth, Bluetooth Low Energy, ZigBee, Thread, ou d'autres protocoles dans la première bande de fréquences et **en ce que** le deuxième moyen de communication (64) est en outre apte à communiquer à l'aide d'au moins un des protocoles de communication KNX RF, ZigBee, SigFox, LoRa, EnOcean, Z-wave, W-MBUS, ou d'autres protocoles dans la deuxième bande de fréquences.

## Patentansprüche

1. Elektronische Platine, umfassend eine gedruckte Schaltung (20), eine Versorgungsvorrichtung (40), eine Mikrosteuereinheit (42), die von der Versorgungsvorrichtung (40) mit Elektrizität versorgt wird, und ein erstes Kommunikationsmittel (62), das dazu fähig ist, über Funkfrequenz in einem ersten Frequenzband zu kommunizieren, wobei die Versorgungsvorrichtung (40), die Mikrosteuereinheit (42) und das erste Kommunikationsmittel (62) auf der gedruckten Schaltung (20) eingerichtet sind, wobei die elektronische Platine (10) ein zweites Kommunikationsmittel (64) umfasst, das dazu fähig ist, über Funkfrequenz in einem zweiten Frequenzband zu kommunizieren, das vom ersten Frequenzband verschieden und/oder getrennt ist, **dadurch gekennzeichnet, dass** die gedruckte Schaltung (20) eine erste äußere leitfähige Schicht (22), eine zweite äußere leitfähige Schicht (24) und mindestens eine innere leitfähige Schicht (26, 28) umfasst, vorzugsweise mindestens zwei innere leitfähige Schichten (26, 28), die zwischen der ersten äußeren leitfähigen Schicht (22) und der zweiten äußeren leitfähigen Schicht (24) eingerichtet ist/sind, wobei die gedruckte Schaltung (20) außerdem eine erste äußere dielektrische Schicht (21), die zwischen der ersten äußeren leitfähigen Schicht (22) und der inneren leitfähigen Schicht (26, 28) oder der zur ersten äußeren leitfähigen Schicht (22) benachbarten inneren leitfähigen Schicht (26) angeordnet ist, eine zweite äußere dielektrische Schicht (23), die zwischen der zweiten äußeren leitfähigen Schicht (24) und der inneren leitfähigen Schicht (26, 28) oder der zur zweiten äußeren leitfähigen Schicht (24) benachbarten inneren leitfähigen Schicht (28) angeordnet ist, und mindestens eine innere dielektrische Schicht (25) umfasst, die zwischen zwei benachbarten inneren leitfähigen Schichten (26, 28) angeordnet ist, wobei die Versorgungsvorrichtung (40), die Mikrosteuereinheit (42) und die Kommunikationsvorrichtung (60) auf der ersten äußeren leitfähigen Schicht (22) und/oder auf der zweiten äußeren leitfähigen Schicht (24) eingerichtet sind, wobei die erste äußere leitfähige Schicht (22), die zweite äußere leitfähige Schicht (24) und die innere(n) leitfähige(n) Schicht(en) (26, 28) eine erste Dicke aufweisen, die erste äußere dielektrische Schicht (21) und die zweite äußere dielektrische Schicht (23) eine zweite Dicke aufweisen, die innere(n) dielektrische (n) Schicht(en) (25) eine dritte Dicke aufweisen, wobei die erste Dicke kleiner ist als die zweite Dicke und die dritte Dicke größer ist als die zweite Dicke und wobei die erste Dicke einer Dicke zwischen 25 µm und 35 µm, vorzugsweise ca. 30 µm, entspricht, die zweite Dicke einer Dicke zwischen 60 µm und 70 µm, vorzugsweise ca. 62 µm, entspricht und die dritte Dicke einer Dicke zwischen 250 µm und 800 µm, vorzugsweise ca. 500 µm, entspricht.

2. Elektronische Platine nach Anspruch 1, **dadurch gekennzeichnet, dass** die erste äußere leitfähige Schicht (22) und/oder die zweite äußere leitfähige Schicht (24) und/oder die innere(n) leitfähige(n) Schicht(en) (26, 28) jeweils mindestens eine Leitbahn (30) umfassen.

3. Elektronische Platine nach Anspruch 2, **dadurch gekennzeichnet, dass** die oder mindestens die eine der Leitbahn(en) (30) der ersten äußeren leitfähigen Schicht (22) und/oder die oder mindestens die eine der Leitbahn(en) (30) der zweiten äußeren leitfähigen Schicht (24) mit der oder mindestens der einen der Leitbahn(en) (30) der oder mindestens einer der äußeren leitfähigen Schicht(en) elektrisch über mindestens einen Leitpfad (32) verbunden ist/sind verbunden ist/sind.

4. Elektronische Platine nach Anspruch 3, **dadurch gekennzeichnet, dass** der oder die Leitpfad(e) (32) einen im Wesentlichen kreisförmigen Querschnitt aufweist/aufweisen, vorzugsweise einen Durchmesser von weniger als ca. 150 µm aufweisen.

5. Elektronische Platine nach einem der Ansprüche 1 bis 4, **dadurch gekennzeichnet, dass** sie außerdem einen ersten Antennenausgang (66), eine passives Schaltungssystem (67) und einen Kombinierer (68) aufweist, wobei das passive Schaltungssystem (67) einerseits mit dem ersten Antennenausgang (66) und andererseits mit dem Kombinierer (68) verbunden ist, wobei der Kombinierer (68) außerdem mit dem ersten Kommunikationsmittel (62) und mit dem zweiten Kommunikationsmittel (64) verbunden ist, wobei die elektronische Platine (10) vorzugsweise außerdem eine kombinierte Antenne (69) umfasst, die elektrisch mit dem ersten Antennenausgang (66) verbunden ist und für die Kommunikation im zweiten Frequenzband geeignet ist, wobei das passive Schaltungssystem (67) die Verschiebung einer ersten Oberwelle einer Resonanz der kombinierten Antenne (69) zu dem ersten Frequenzband hin ermöglicht.

6. Elektronische Platine nach einem der Ansprüche 1 bis 4, **dadurch gekennzeichnet, dass** sie außerdem einen ersten Antennenausgang (66), der elektrisch mit dem ersten Kommunikationsmittel (62) verbunden ist, und einen zweiten Antennenausgang (70) umfasst, der elektrisch mit dem zweiten Kommunikationsmittel (64) verbunden ist, wobei die elektronische Platine (10) vorzugsweise außerdem eine erste Antenne (81), die für die Kommunikation im ersten Band geeignet und elektrisch mit dem ersten Antennenausgang (66) verbunden ist, und/oder eine zweite Antenne umfasst, die für die Kommunikation im zweiten Frequenzband und vorzugsweise im dritten Frequenzband geeignet und elektrisch mit dem zweiten Antennenausgang (70) verbunden ist.

7. Elektronische Platine nach Anspruch 6, **dadurch gekennzeichnet, dass** die Mikrosteuereinheit (42) und die Versorgungsvorrichtung (40) auf der ersten äußeren leitfähigen Schicht (22) eingerichtet sind und dass das erste Kommunikationsmittel (62), das zweite Kommunikationsmittel (64), der erste Antennenausgang (66) und der zweite Antennenausgang (70) und gegebenenfalls die erste Antenne (81) und die zweite Antenne auf der zweiten äußeren leitfähigen Schicht (24) eingerichtet sind.

8. Elektronische Platine nach einem der Ansprüche 1 bis 4, **dadurch gekennzeichnet, dass** sie außerdem einen Schalter, der dazu fähig ist, von der Mikrosteuereinheit (42) betätigt zu werden, einen ersten Antennenausgang (66), der elektrisch mit dem ersten Kommunikationsmittel (62) verbunden ist, einen zweiten Antennenausgang (70), der elektrisch mit einem ersten Ausgang des Schalters verbunden ist, und einen dritten Antennenausgang (72) umfasst, der elektrisch mit einem zweiten Ausgang (36) des Schalters verbunden ist, wobei ein Eingang des Schalters mit dem zweiten Kommunikationsmittel (64) verbunden ist, wobei der Schalter geeignet ist, abhängig von einem Befehl der Mikrosteuereinheit (42) entweder das zweite Kommunikationsmittel (64) und den zweiten Antennenausgang (70) zu verbinden oder das zweite Kommunikationsmittel (64) und den dritten Antennenausgang (72) zu verbinden, wobei die elektronische Platine (10) vorzugsweise außerdem eine erste Antenne (81), die für die Kommunikation im ersten Frequenzband geeignet ist und elektrisch mit dem ersten Antennenausgang (66) verbunden ist, und/oder eine zweite Antenne, die für die Kommunikation im zweiten Frequenzband geeignet ist und elektrisch mit dem zweiten Antennenausgang (70) verbunden ist, und/oder eine dritte Antenne umfasst, die für die Kommunikation im dritten Frequenzband geeignet ist und elektrisch mit dem dritten Antennenausgang (72) verbunden ist.

9. Elektronische Platine nach einem der Ansprüche 5 bis 8, **dadurch gekennzeichnet, dass** die kombinierte Antenne (69) und/oder die erste Antenne (81) und/oder die zweite Antenne und/oder die dritte Antenne mindestens eine dielektrische Schicht, vorzugsweise aus einem Keramikmaterial, und eine leitfähige Schicht umfasst, die mindestens teilweise die dielektrische Schicht bedeckt.

10. Elektronische Platine nach einem der Ansprüche 5 bis 9, **dadurch gekennzeichnet, dass** die gedruckte Schaltung (20) im Wesentlichen eine rechteckige oder quadratische Form hat und dass der erste Antennenausgang (66) und/oder der zweite Antennenausgang (70) und/oder der dritte Antennenausgang (72) in der Nähe eines Randes (19) der gedruckten Schaltung (20) eingerichtet ist/sind.

11. Elektronische Platine nach einem der Ansprüche 1 bis 6, 8 oder 9, **dadurch gekennzeichnet, dass** sie außerdem mindestens einen elektrischen/elektronischen Kontakt (18) umfasst, der an einem Rand (19) der gedruckten Schaltung (20) eingerichtet ist, vorzugsweise an einem Rand (19) der zweiten äußeren leitfähigen Schicht (24) der gedruckten Schaltung (20).

12. Elektronische Platine nach Anspruch 10 in Verbindung mit Anspruch 11, **dadurch gekennzeichnet, dass** ein Bereich, der jeder der vier Ecken (17) der gedruckten Schaltung (20) benachbart ist, frei von einem elektrischen/elektronischen Kontakt (18) ist.

13. Elektronische Platine nach einem der Ansprüche 2 bis 12, **dadurch gekennzeichnet, dass** die innere leitfähige Schicht (26, 28) und/oder die innere leitfähige Schicht von den inneren leitfähigen Schichten (26), die der ersten äußeren leitfähigen Schicht (22) am nächsten liegt, in einem Bereich (63) zwischen dem ersten Kommunikationsmittel (62) und dem ersten Antennenausgang (66) und/oder der ersten Antenne (81) und/oder in einem Bereich (65) zwischen dem zweiten Kommunikationsmittel (64) und dem zweiten Antennenausgang (70) und/oder der zweiten Antenne und/oder dem dritten Antennenausgang (72) im Wesentlichen frei von einer Leitbahn (30) ist.

14. Elektronische Platine nach einem der Ansprüche 1 bis 13, **dadurch gekennzeichnet, dass** das erste Frequenzband Frequenzen über 1 GHz umfasst und das zweite Frequenzbank Frequenzen unter 1 GHz umfasst, wobei das zweite Kommunikationsmittel (64) vorzugsweise dazu fähig ist, in einem dritten Frequenzband zu kommunizieren, das Frequenzen unter 500 MHz umfasst.

15. Elektronische Platine nach Anspruch 14, **dadurch gekennzeichnet, dass** das erste Frequenzband die Frequenzen zwischen 2400 und 2483 MHz umfasst und dass das zweite Frequenzband die Frequenzen zwischen 868 und 950 MHz umfasst, wobei das dritte Frequenzband vorzugsweise die Frequenzen zwischen 169 und 435 MHz umfasst.

16. Elektronische Platine nach einem der Ansprüche 14 bis 15, **dadurch gekennzeichnet, dass** das erste Kommunikationsmittel dazu fähig ist, mithilfe mindestens eines der Kommunikationsprotokolle Bluetooth, Bluetooth Low Energy, ZigBee, Thread oder anderer Kommunikationsprotokolle im ersten Frequenzband zu kommunizieren, und dass das zweite Kommunikationsmittel (64) außerdem dazu fähig ist, mithilfe mindestens der Kommunikationsprotokolle KNX RF, ZigBee, SigFox, LoRa, EnOcean, Z-wave, W-MBUS und anderer Kommunikationsprotokolle im zweiten Frequenzband zu kommunizieren.

## Claims

1. Electronic board comprising a printed circuit (20), a power supply device (40), a microcontroller (42) supplied with electricity by the power supply device (40) and a first communication means (62) which is able to communicate by radiofrequency in a first frequency band, the power supply device (40), the microcontroller (42) and the first communication means (62) being arranged on the printed circuit (20), the electronic board (10) comprising a second communication means (64) which is able to communicate by radiofrequency in a second frequency band which is distinct and/or disjoint from the first frequency band, **characterized in that** the printed circuit (20) comprises a first outer conductive layer (22), a second outer conductive layer (24) and at least one inner conductive layer (26, 28), preferably at least two inner conductive layers (26, 28), which is/are arranged between the first outer conductive layer (22) and the second outer conductive layer (24), the printed circuit (20) further comprising a first outer dielectric layer (21) which is positioned between the first outer conductive layer (22) and the inner conductive layer (26, 28) or the inner conductive layer (26) which is adjacent to the first outer conductive layer (22), a second outer dielectric layer (23) which is positioned between the second outer conductive layer (24) and the inner conductive layer (26, 28) or the inner conductive layer (28) which is adjacent to the second outer conductive layer (24), and at least one inner dielectric layer (25) which is positioned between two adjacent inner conductive layers (26, 28), the power supply device (40), the microcontroller (42) and the communication device (60) being arranged on the first outer conductive layer (22) and/or on the second outer conductive layer (24), **in that** the first outer conductive layer (22), the second outer conductive layer (24) and the one or more inner conductive layers (26, 28) have a first thickness, the first outer dielectric layer (21) and the second outer dielectric layer (23) having a second thickness, the one or more inner dielectric layers (25) having a third thickness, the first thickness being less than the second thickness and the third thickness being greater than the second thickness, and **in that** the first thickness corresponds to a thickness between 25 µm and 35 µm, preferably about 30 µm, the second thickness corresponds to a thickness between 60 µm and 70 µm, preferably about 62 µm and the third thickness corresponds to a thickness between 250 µm and 800 µm, preferably about 500 µm.

2. Electronic board according to Claim 1, **characterized in that** the first outer conductive layer (22) and/or the second outer conductive layer (24) and/or the one or more inner conductive layers (26, 28) respectively comprise at least one conductive track (30).

3. Electronic board according to Claim 2, **characterized in that** the or at least one of the conductive tracks (30) of the first outer conductive layer (22) and/or the or at least one of the conductive tracks (30) of the second outer conductive layer (24) is/are connected to the or at least one of the conductive tracks (30) of the or at least one of the outer conductive layers is/are electrically connected via at least one conductive path (32) .

4. Electronic board according to Claim 3, **characterized in that** the one or more conductive paths (32) have an essentially circular cross section, preferably having a diameter less than about 150 µm.

5. Electronic board according to any one of Claims 1 to 4, **characterized in that** it further comprises a first antenna output (66), a passive circuit system (67) and a combiner (68), the passive circuit system (67) being connected on one hand to the first antenna output (66) and on the other hand to the combiner (68), the combiner (68) being further connected to the first communication means (62) and to the second communication means (64), the electronic board (10) preferably further comprising a combined antenna (69) which is electrically connected to the first antenna output (66) and suitable for communication in the second frequency band, the passive circuit system (67) allowing a first harmonic of a resonance of the combined antenna (69) to be shifted towards the first frequency band.

6. Electronic board according to any one of Claims 1 to 4, **characterized in that** it further comprises a first antenna output (66) which is electrically connected to the first communication means (62) and a second antenna output (70) which is electrically connected to the second communication means (64), the electronic board (10) preferably further comprising a first antenna (81) which is suitable for communication in the first band and electrically connected to the first antenna output (66) and/or a second antenna which is suitable for communication in the second frequency band, and preferably the third frequency band, and electrically connected to the second antenna output (70).

7. Electronic board according to Claim 6, **characterized in that** the microcontroller (42) and the power supply device (40) are arranged on the first outer conductive layer (22) and **in that** the first communication means (62), the second communication means (64), the first antenna output (66) and the second antenna output (70) and, where appropriate, the first antenna (81) and the second antenna are arranged on the second outer conductive layer (24).

8. Electronic board according to any one of Claims 1 to 4, **characterized in that** it further comprises a switch which is able to be actuated by the microcontroller (42), a first antenna output (66) which is electrically connected to the first communication means (62), a second antenna output (70) which is electrically connected to a first output of the switch and a third antenna output (72) which is electrically connected to a second output (36) of the switch, an input of the switch being connected to the second communication means (64), the switch being suitable, depending on a command from the microcontroller (42), either for connecting the second communication means (64) and the second antenna output (70) or for connecting the second communication means (64) and the third antenna output (72), the electronic board (10) preferably further comprising a first antenna (81) which is suitable for communication in the first frequency band and electrically connected to the first antenna output (66) and/or a second antenna which is suitable for communication in the second frequency band and electrically connected to the second antenna output (70) and/or a third antenna which is suitable for communication in the third frequency band and electrically connected to the third antenna output (72).

9. Electronic board according to any one of Claims 5 to 8, **characterized in that** the combined antenna (69) and/or the first antenna (81) and/or the second antenna and/or the third antenna comprises at least one dielectric layer, which is preferably made of a ceramic material, and a conductive layer at least partially covering the dielectric layer.

10. Electronic board according to any one of Claims 5 to 9, **characterized in that** the printed circuit (20) is essentially rectangular or square in shape and **in that** the first antenna output (66) and/or the second antenna output (70) and/or the third antenna output (72) is/are arranged in the vicinity of an edge (19) of the printed circuit (20).

11. Electronic board according to any one of Claims 1 to 6, 8 or 9, **characterized in that** it further comprises at least one electrical/electronic contact (18) which is arranged on an edge (19) of the printed circuit (20), preferably on an edge (19) of the second outer conductive layer (24) of the printed circuit (20).

12. Electronic board according to Claim 10 taken in combination with Claim 11, **characterized in that** a region adjoining each of the four corners (17) of the printed circuit (20) is free from electrical/electronic contacts (18) .

13. Electronic board according to any one of Claims 2 to 12, **characterized in that** the inner conductive layer (26, 28) and/or the inner conductive layer among the inner conductive layers (26) which is closest to the first outer conductive layer (22) is, in a region (63) between the first communication means (62) and the first antenna output (66) and/or the first antenna (81) and/or in a region (65) between the second communication means (64) and the second antenna output (70) and/or the second antenna and/or the third antenna output (72), essentially free of conductive tracks (30).

14. Electronic board according to any one of Claims 1 to 13, **characterized in that** the first frequency band comprises frequencies which are greater than 1 GHz and the second frequency band comprises frequencies which are less than 1 GHz, the second communication means (64) preferably being able to communicate in a third frequency band comprising frequencies which are less than 500 MHz.

15. Electronic board according to Claim 14, **characterized in that** the first frequency band comprises the frequencies between 2400 and 2483 MHz and **in that** the second frequency band comprises the frequencies between 868 and 950 MHz, the third frequency band preferably comprising the frequencies between 169 and 435 MHz.

16. Electronic board according to either one of Claims 14 and 15, **characterized in that** the first communication means is able to communicate using at least one of the Bluetooth, Bluetooth Low Energy, ZigBee or Thread communication protocols, or other protocols in the first frequency band, and **in that** the second communication means (64) is further able to communicate using at least one of the KNX RF, ZigBee, SigFox, LoRa, EnOcean, Z-wave or W-MBUS communication protocols, or other protocols in the second frequency band.
